# FASCICULE DE BREVET EUROPEEN

(11) **EP 2 661 463 B1**
(45) Date de publication et mention de la délivrance du brevet: **28.09.2022**
(21) Numéro de dépôt: 12700027.1
(22) Date de dépôt: 06.01.2012
(51) Int. Cl.: C08L 23/00, C08J 5/04, C08K 7/02

(54) **MATERIAU COMPOSITE INJECTABLE RENFORCE PAR DES FIBRES NATURELLES**
DURCH NATURFASERN VERSTÄRKTES INJIZIERBARES VERBUNDMATERIAL
INJECTABLE COMPOSITE MATERIAL REINFORCED BY NATURAL FIBERS

(30) Priorité: 07.01.2011 FR 1150131
(43) Date de publication de la demande: 13.11.2013
(73) Titulaire: Faurecia Intérieur Industrie, 92000 Nanterre (FR)
(72) Inventeur: DUFRANCATEL, Laurence, F-95220 Herblay (FR); DA COSTA PITO, Sergio, F-95800 Cergy (FR); KANNENGIESSER, Pauline, F-95300 Pontoise (FR); AOUDJIT, Embarka, F-59510 Hem (FR); MOUGIN, Gérard, F-21190 Meursault (FR)
(74) Mandataire: Lavoix
(86) Numéro de dépôt international: PCT/EP2012/050179
(87) Numéro de publication internationale: WO 2012/093167

(56) Documents cités:
- EP-A1- 1 990 362
- WO-A2-2004/016667
- US-A1- 2004 214 925

## Description

La présente invention concerne un matériau composite renforcé, notamment pour la fabrication de pièces dans le domaine automobile.

Dans le cadre d'une recherche de réduction de la pression d'un produit sur les ressources et l'environnement tout au long de son cycle de vie, de l'extraction des matières premières jusqu'à son traitement en fin de vie, l'utilisation de matériaux verts issus du monde végétal est particulièrement recherchée.

Ainsi, il est connu de WO 2006/108256 d'associer des fibres de chanvre à un polymère thermoplastique, notamment un polypropylène, pour préparer un matériau injectable.

Les matériaux composites obtenus sont intéressants mais leurs propriétés présentent encore des limites, notamment en matière de résistance aux chocs. Par ailleurs, ils ne répondent pas toujours aux exigences spécifiques au domaine automobile comme les exigences en matière d'odeur automobile et de rejet de composés volatils.

Aussi, le but de la présente invention est de proposer un tel matériau composite injectable amélioré, notamment au niveau de la résistance aux chocs, comparé au polypropylène à charge minérale.

Ce but est atteint selon l'invention par un matériau composite comprenant :
(a) 28 à 95 % en poids d'un copolymère polypropylène-polyéthylène ;
(b) 0 à 10 % en poids d'agent de fluidité, notamment une polyoléfine telle que le polyéthylène ou le polypropylène homopolymère ;
(c) 1 à 20 % en poids d'un modifiant choc ;
(d) 1 à 20 % en poids d'un agent compatibilisant ; et
(e) 3 à 70 % en poids de fibres naturelles,
dans lequel le copolymère polypropylène-polyéthylène forme une matrice.

Un tel matériau permet de par son profil technique, notamment en matière de résistance aux chocs, d'atteindre un gain de masse de 3 à 50% comparé au polypropylène à charge minérale conventionnel, avec une réduction d'épaisseur des pièces obtenues par injection, injection basse pression, haute pression, injection compression et surmoulage. A titre d'exemple, l'épaisseur d'une pièce injectée de 2,5mm peut être réduite de 0,5 mm, soit un gain de masse de 25%.

On entend dans le présent exposé par le terme « matériau composite » couvrir les matériaux hétérogènes associant plusieurs types de matière qui ne se mélangent pas. Particulièrement visés sont les matériaux composites composés de polymères à base d'hydrocarbures et généralement obtenus par voie synthétique à partir de pétrole et de polymères à base de carbohydrates, avec des extraits ou dérivés de produits naturels. Particulièrement visés sont des matériaux associant un polymère polyoléfinique avec des fibres d'origine naturelles telles que définies ci-après. Les différentes phases d'un matériau composite peuvent être détectées sous le microscope optique.

On entend par le terme « indice de fluidité » (IF), souvent appelé MFI de l'acronyme du terme analogue anglais « Melt Flow Index », la fluidité à chaud d'un polymère telle qu'évaluée par le débit du polymère en fusion d'une température donnée, à travers un capillaire normalisé pendant une période donnée, généralement 10 minutes, sous une charge de 2,16 kg, dans les conditions indiquées dans la norme internationale ISO 1133.

On entend par le terme « copolymère », par opposition au terme « homopolymère », désigner un polymère issu de la copolymérisation d'au moins deux types de monomère, chimiquement différents, appelés comonomères. Les copolymères obtenus par la copolymérisation de deux monomères sont parfois appelés bipolymères, ceux obtenus à partir de trois monomères terpolymères et ceux obtenus à partir de quatre monomères quaterpolymères^{[]}. Le copolymère est donc formé d'au moins deux motifs de répétition. Suivant la manière dont les motifs de répétition sont répartis dans les chaînes macromoléculaires, on distingue les copolymères à enchaînement aléatoire, alterné et statistique et les copolymères séquencés ou copolymères blocs. Par ailleurs, on connaît des copolymères issus de greffage.

On entend par le terme « modifiant choc » couvrir les agents ajoutés à un matériau en vue d'améliorer les propriétés au niveau de la résistance aux chocs. Ces modifiants sont des polymères ou des molécules qui forment des systèmes multiphasés avec la matrice ou qui réagissent chimiquement avec la matrice, améliorant ainsi sa résilience.

On entend par le terme « agent compatibilisant » viser les composés présentant deux extrémités de structure chimique différente ayant respectivement une affinité particulière pour deux composantes d'un matériau hétérogène permettant de ce fait d'améliorer la compatibilité entre ces deux composantes.

On entend par le terme « fibres naturelles » viser des matériaux fibreux issus de matières d'origine végétale ou animale.

Enfin, on entend par le terme « matrice » désigner dans un matériau composite la phase continue dans laquelle les autres composantes se trouvent dispersées. Généralement, mais pas toujours, la matrice est formée par la composante présente en proportion majoritaire.

Le matériau composite selon l'invention contient à titre de matrice un copolymère polypropylène-polyéthylène.

En effet, il s'avère que ce copolymère confère au matériau composite de l'invention une résistance aux chocs supérieure à ceux traditionnellement utilisés, comportant une matrice en polypropylène.

De préférence, le matériau composite présente, à sa température de transformation spécifique, une viscosité allant de 5 Pa.s à 1000Pa.s dans une gamme de vitesse de cisaillement spécifique à l'injection allant de 100s⁻¹ à 50 000s⁻¹. Grâce à cette caractéristique, le matériau composite est injectable. Il est alors utilisable dans la plupart des procédés d'injection connus, comme par exemples l'injection basse pression, haute pression, l'injection sandwich, la bi-injection, l'injection compression et le surmoulage. La température de transformation spécifique est la température à laquelle le matériau est suffisamment fluide pour pourvoir être injecté dans une cavité (par exemple entre 220 et 240°C pour les polypropylènes et entre 260 et 280°C pour les polycarbonates (PC) et les polymères acrylonitrile butadiène styrène (ABS). Cette température de transformation spécifique est propre à chaque matériau.

Les matériaux composites comportent une matrice à base de ces copolymères comportant 10 à 90 % molaires de motifs d'éthylène.

Le matériau composite comporte par ailleurs de 0 à 10 % en poids d'un agent de fluidité. Cet agent de fluidité est un polymère de faible indice de fluidité (IF), présentant un indice de fluidité compris entre 200 et 2000 g/ 10 min à 230°C sous une charge de 2,16 kg et est une polyoléfine homopolymère ou copolymère, notamment un polyéthylène homo- ou copolymère, ou encore un polypropylène homopolymère ou copolymère.

L'agent de fluidité permet si nécessaire d'augmenter la fluidité du matériau de manière à le rendre injectable. Selon le choix opéré, il peut par ailleurs contribuer à améliorer la résistance aux chocs et diminuer les composés volatils dégagés par le matériau. On entend par composés volatils, l'ensemble des émissions générées par un matériau susceptibles de produire une odeur ou des composés organiques volatils.

Ainsi, les agents de fluidité peuvent être obtenus notamment par catalyse metallocène ou par catalyse Ziegler Natta. Avantageusement, l'agent de fluidité est une polyoléfine obtenue pas catalyse métallocène. En effet, on constate que la catalyse métallocène conduit à des polyoléfines dont la température de fusion est beaucoup plus basse qu'une polyoléfine obtenue par catalyse Ziegler Natta, conduisant ainsi à une fluidité du matériau beaucoup plus importante. De plus, la catalyse par metallocène induit une distribution des masses moléculaires beaucoup plus étroite et donc une teneur en molécules de faibles masses plus faible réduisant ainsi la teneur en composés susceptible d'être rejetés. Il n'est donc pas nécessaire, comme dans le cas de polyoléfines obtenues par catalyse Ziegler-Natta, d'utiliser des moyens chimiques, tels que la rupture de chaines par attaque acide (exemple anhydrides maléiques) pour atteindre des fluidités élevés. Cette technique génère alors beaucoup de composés volatils.

Le choix de tels agents de fluidité contribue dès lors à rendre le matériau composite injectable - du fait de la plus faible longueur de chaîne des composés - et à respecter les exigences de rejet de composés volatils des constructeurs automobiles - du fait d'une faible teneur en composés susceptibles d'être rejetés du matériau.

L'agent de fluidité particulièrement préféré est le polypropylène, de préférence le polypropylène homopolymère obtenu par catalyse métallocène.

Par ailleurs, le polyéthylène, et en particulier le polyéthylène modifiée par des alcènes ou tout type de greffon, est un agent de fluidité particulièrement préféré pour certaines applications car il permet d'améliorer les performances en termes de résistance aux chocs, en complément des modifiants chocs, discutés ci-après.

Le matériau selon l'invention contient en outre 1 à 20% en poids, de préférence 2 à 10 et tout particulièrement 4 à 8 % en poids de modifiant choc.

L'addition du modifiant choc permet d'augmenter la résistance aux chocs du matériau composite de jusqu'à 200%.

Le modifiant choc est un composé élastomérique, choisi parmi le groupe constitué par le monomère éthylène- propylène-diène (EPDM), le monomère éthylène-propylène (EPM), le caoutchouc éthylène-propylène (EPR), les polyoléfines élastomères (POE), les copolymères et terpolymères à base d'éthylène et de propylène, le caoutchouc de nitrile - butadiène (NBR), l'isobutylène (IB), le caoutchouc chloré, le poly(styrène-butadiène-styrène (SBS), le copolymère styrène-éthylène-butène-styrène (SEBS), le caoutchouc isobutylène-isoprène (IIR), le copolymère styrène-isoprène-styrène (SIS), le polyéthylène chloré (CM), l'isoprène, l'éthylène-butène, leurs mélanges et dérivés, notamment greffés par du acide maléique et/ou de l'anhydride d'acide maléique.

Le matériau composite selon l'invention comprend par ailleurs 1 à 20%, de préférence 5 à 15 % en poids d'un agent compatibilisant.

L'agent compatibilisant assure une bonne affinité entre les fibres et les autres ingrédients du matériau, notamment la matrice polymère et permet ainsi l'obtention d'un mélange homogène.

L'agent compatibilisant est un composé choisi parmi les polyoléfines greffées par des groupes polaires. A titre de polyoléfines, on peut notamment envisager l'utilisation de (co)polymères du polypropylène.

L'agent compatibilisant est choisi dans le groupe constitué par les polyoléfines greffées par un acide carboxylique ou un de ses esters ou anhydrides. Parmi les acides carboxyliques utiles pour le greffage, on peut mentionner notamment l'acide maléique et l'anhydride maléique.

Le matériau composite selon l'invention contient en outre 3 à 70 %, de préférence 5 à 40% et tout particulièrement 10 à 30% en poids de fibres naturelles.

La présence de fibres permet notamment d'augmenter la résistance thermique du matériau.

Même en présence de ces fibres naturelles, le matériau reste injectable. Toutefois, on observe un comportement à l'injection optimum lorsque le matériau composite contient moins de 30% en poids de fibres naturelles.

Les fibres naturelles sont choisies dans le groupe constitué par le coton, le lin, le chanvre, le chanvre de Manille ou l'abaca, le bananier, le jute, la ramie, le raphia, le sisal, le genêt, la laine, l'alpaga, le mohair, le cachemire, l'angora, la soie, le bambou, le miscanthus, le kenaf, le coco, l'agave, le sorgo, le switch-grass et le bois.

La longueur des fibres naturelles peut varier largement, selon les applications envisagées pour le matériau composite. Pour la fabrication de pièces intérieures pour l'automobile, on utilise de préférence des fibres dont la longueur moyenne est comprise entre 0,1 et 10 mm.

Les fibres sont de préférence utilisées après séchage à une teneur en eau inférieure à 5% en poids. Elles peuvent ensuite être soumis à un traitement de surface afin d'augmenter la compatibilité avec la matrice, en particulier avec des silanes.

Selon un second aspect, l'invention vise un procédé de préparation du matériau composite décrit ci-dessus comprenant les étapes consistant à :
(i) introduction des composantes polymériques (a) à (d) et d'au moins une partie de la composante (e) dans un dispositif de mélange approprié ;
(ii) fusion et mélange desdites composantes dans le dispositif de mélange;
(iii) le cas échéant, introduction du reste de la composante (e) dans le mélange ;
(iv) fusion et mélange final des composantes ; et
(v) granulation.

De préférence, les étapes (i) à (v) sont réalisées dans une extrudeuse à vis.

Selon un troisième aspect, l'invention concerne l'utilisation du matériau composite décrit pour la fabrication de pièces par injection, notamment destinées à l'intérieur d'automobiles.

L'augmentation de la résistance thermique obtenue notamment grâce aux fibres est particulièrement intéressante pour des applications de type pièces d'intérieur véhicule comme par exemple des planches de bord, des panneaux de porte. En effet ces pièces d'intérieur véhicule peuvent être soumises à des températures élevées pouvant atteindre 120°C, surtout dans la zone proche des surfaces vitrées.

L'injection de pièces en utilisant le matériau composite décrit peut être réalisée de manière conventionnelle, par exemple comme suit.

La matière plastique sous forme de granulé est introduite dans une vis de plastification chauffée et régulée en température et ramollie sous l'action conjuguée de la vis et de la température pour atteindre à l'avant de la vis un état visqueux, constituant la réserve de matière prête à être injectée.

La matière présente à l'avant de la vis de plastification est ensuite injectée sous forte pression à l'intérieur d'un moule (ou cavité) présentant la forme de la pièce souhaitée et dont la température est inférieure à la température de transformation.

Une pression constante est appliquée pendant un temps déterminé afin de continuer à alimenter les empreintes afin de palier au retrait de la matière durant son refroidissement. La pièce est ensuite refroidie durant quelques secondes puis éjectée.

L'invention sera expliquée plus en détail au moyen des exemples qui suivent, donnés à titre purement illustratif.

### EXEMPLE

Dans une extrudeuse à bivis, on introduit par une première trémie 39 kg un copolymère de propylène et d'éthylène, 8 kg de polypropylène obtenu par catalyse métallocène (MFI 400) et, à titre d'additif 20 kg d'un modifiant choc (EP5 1060 vendu par la société HIFAX) et 3 kg d'un agent compatibilisant puis 30 kg de fibres de chanvre rouies, dont la moitié est introduit au moyen d'une seconde trémie située en aval. Les composantes et leurs proportions respectives sont indiquées dans le tableau 1 ci-dessous.

**Tableau 1 : Composition du matériau composite**

| **Composante** | **Proportion** [% en poids] |
|---|---|
| Copolymère de propylène - éthylène | 39 |
| Polypropylène | 8 |
| Modifiant choc | 20 |
| Agent compatibilisant | 3 |
| Fibres naturelles | 30 |

Le mélange est soumis à un compoundage par extrusion dans les conditions suivantes: Température : 180°C
Pression : 5 à 30 bars

On obtient le matériau composite sous forme de granulés susceptibles d'être utilisés pour la fabrication de pièces par injection.

La formulation du matériau composite permet d'obtenir un matériau présentant un profil technique supérieur aux matériaux standards, ce qui permet une réduction de l'épaisseur des pièces de 2,5 mm à 2mm. Compte tenu de la réduction de densité par ailleurs du matériau selon l'invention par rapport au matériau standard, le gain de masse atteint environ 25%. Le tableau ci-dessous rassemble les propriétés clés du composite préparé.

**Tableau 2 : Profil de propriétés mécaniques, thermiques, et rhéologiques**

| **Propriétés** | **Unité** | **Valeur** |
|---|---|---|
| Module d'élasticité à 23°C (ISO527) | MPa | 2900 |
| Résistance à l'impact selon Izod à 23°C (ISO180)] | kJ/m2 | 6 |
| HDT A (1,8 MPa) (ISO 75) | °C | 80 |
| HDT B (0,45 MPa) (ISO 75) | °C | 135 |
| Longueur d'écoulement en spirale] | Cm | 80 |

Ces propriétés permettent d'utiliser ce matériau composite pour fabriquer des pièces destinées à l'habillage intérieur d'automobiles, notamment des planches de bord, des panneaux de porte, qu'ils soient revêtus ou non, mais aussi des pièces destinées à la structure de pièces d'habillage intérieur de véhicule, par exemple des conduits de dégivrage ou encore des pièces de renforts adaptées pour résister à des impacts d'un des membres des passagers contre ces dites pièces de renfort lors d'un impact de véhicule contre un autre véhicule.

## Revendications

1. - Matériau composite injectable comprenant :
(a) 28 à 95 % en poids d'un copolymère polypropylène-polyéthylène comportant de 10 à 90 % molaires d'éthylène ;
(b) 0 à 10 % en poids d'agent de fluidité, l'agent de fluidité étant un polymère présentant un indice de fluidité compris entre 200 et 2000 g/ 10 min à 230°C sous une charge de 2,16 kg et étant choisi parmi choisi parmi le groupe constitué par un polypropylène homopolymère, un polypropylène copolymère, un polyéthylène homopolymère et un polyéthylène copolymère ;
(c) 1 à 20 % en poids d'un modifiant choc choisi parmi le groupe constitué par le monomère éthylène- propylène-diène (EPDM), le monomère éthylène-propylène (EPM), le caoutchouc éthylène-propylène (EPR), les polyoléfines élastomères (POE), les copolymères et terpolymères à base d'éthylène et de propylène, le caoutchouc de nitrile - butadiène (NBR), l'isobutylène (IB), le caoutchouc chloré, le poly(styrène-butadiène-styrène (SBS), le copolymère styrène-éthylène-butène-styrène (SEBS), le caoutchouc isobutylène-isoprène (IIR), le copolymère styrène-isoprène-styrène (SIS), le polyéthylène chloré (CM), l'isoprène, l'éthylène-butène, leurs mélanges et dérivés, notamment greffés par du acide maléique et/ou de l'anhydride d'acide maléique ;
(d) 1 à 20 % en poids d'un agent compatibilisant choisi dans le groupe constitué par les polyoléfines greffées par un acide carboxylique ou un de ses esters ou anhydrides ; et
(e) 3 à 70 % en poids de fibres naturelles choisies dans le groupe constitué par le coton, le lin, le chanvre, le chanvre de Manille ou l'abaca, le bananier, le jute, la ramie, le raphia, le sisal, le genêt, la laine, l'alpaga, le mohair, le cachemire, l'angora, la soie, le bambou, le miscanthus, le kenaf, le coco, l'agave, le sorgo, le switch-grass et le bois,
dans lequel le copolymère polypropylène-polyéthylène forme une matrice, la matrice étant formée par la composante présente en proportion majoritaire.

2. Matériau composite selon la revendication 1, dans lequel l'agent de fluidité est une polyoléfine.

3. Matériau composite selon l'une des revendications 1 à 2, dans lequel l'agent de fluidité est une polyoléfine obtenue par catalyse metallocène.

4. Matériau composite selon l'une des revendications 1 à 3, présentant, à sa température de transformation spécifique, une viscosité allant de 5 Pa.s à 1000Pa.s dans une gamme de vitesse de cisaillement spécifique à l'injection allant de 100s⁻¹ à 50 000s⁻¹.

5. Matériau composite selon l'une des revendications 1 à 4, comprenant 10 à 30 % en poids de fibres naturelles.

6. Procédé de préparation d'un matériau composite selon l'une des revendications 1 à 5, comprenant les étapes consistant à :
(i) introduction des composantes polymériques (a) à (d) et d'au moins une partie de la composante (e) dans un dispositif de mélange approprié ;
(ii) fusion et mélange desdites composantes dans le dispositif de mélange;
(iii) le cas échéant, introduction du reste de la composante (e) dans le mélange ;
(iv) fusion et mélange final des composantes ; et
(v) granulation.

7. Procédé de préparation selon la revendication 6, dans lequel les étapes (i) à (v) sont réalisées dans une extrudeuse à vis.

8. Utilisation du matériau composite selon l'une des revendications 1 à 5 pour la fabrication de pièces par injection.

9. Utilisation selon la revendication 8 pour la fabrication de pièces d'intérieur de véhicule.

## Patentansprüche

1. Einspritzbarer Verbundwerkstoff, umfassend:
(a) zu 28 bis 95 Gew.-% ein Polypropylen-Polyethylen-Copolymer, das zu 10 bis 90 Mol-% Ethylen aufweist;
(b) zu 0 bis 10 Gew.-% ein Fließmittel, wobei das Fließmittel ein Polymer ist, das eine Fließfähigkeit zwischen 200 und 2000 g/10 min bei 230 °C unter einer Last von 2,16 kg vorweist und aus der Gruppe ausgewählt ist, bestehend aus einem Polypropylenhomopolymer, einem Polypropylen-Copolymer, einem Polyethylenhomopolymer und einem Polyethylen-Copolymer;
(c) zu 1 bis 20 Gew.-% einen Schlagzähmodifizierer, der aus der Gruppe ausgewählt ist, bestehend aus Ethylenpropylendienmonomer (EPDM), Ethylenpropylenmonomer (EPM), Ethylenpropylenkautschuk (EPR), elastomeren Polyolefinen (POE), Copolymeren und Terpolymeren auf Basis von Ethylen und Propylen, Nitrilbutadienkautschuk (NBR), Isobutylen (IB), Chlorkautschuk, Poly(styrolbutadienstyrol (SBS), Styrol-Ethylen-Buten-Styrol-Copolymer (SEBS), Isobutylenisoprenkautschuk (IIR), Styrol-Isopren-Styrol-Copolymer (SIS), chloriertem Polyethylen (CM), Isopren, Ethylenbuten, deren Mischungen und Derivaten, insbesondere durch Maleinsäure und/oder Maleinsäureanhydrid gepfropft;
(d) zu 1 bis 20 Gew.-% ein Kompatibilisierungsmittel, das aus der Gruppe ausgewählt ist, bestehend aus Polyolefinen, die durch eine Carbonsäure oder einen ihrer Ester oder eines ihrer Anhydride gepfropft ist; und
(e) zu 3 bis 70 Gew.-% Naturfasern, die aus der Gruppe ausgewählt sind, bestehend aus Baumwolle, Leinen, Hanf, Manilahanf oder Abaca, Bananenstaude, Jute, Chinagras, Bast, Sisal, Ginster, Wolle, Alpaka, Mohair, Kaschmir, Angora, Seide, Bambus, Miscanthus, Kenaf, Kokosfaser, Agave, Sorghum, Rutenhirse und Holz, wobei das Polypropylen-Polyethylen-Copolymer eine Matrix ausbildet, wobei die Matrix durch die Komponente ausgebildet wird, die in einem Hauptanteil vorliegt.

2. Verbundwerkstoff nach Anspruch 1, wobei das Fließmittel ein Polyolefin ist.

3. Verbundwerkstoff nach einem der Ansprüche 1 bis 2, wobei das Fließmittel ein durch Metallocenkatalyse erhaltenes Polyolefin ist.

4. Verbundwerkstoff nach einem der Ansprüche 1 bis 3, der, bei seiner spezifischen Umwandlungstemperatur, eine Viskosität ab 5 Pa.s bis 1000 Pa.s in einem einspritzspezifischen Schergeschwindigkeitsbereich ab 100 s⁻¹ bis 50.000 s⁻¹ vorweist.

5. Verbundwerkstoff nach einem der Ansprüche 1 bis 4, umfassend zu 10 bis 30 Gew.-% Naturfasern.

6. Verfahren zum Gewinnen eines Verbundwerkstoffs nach einem der Ansprüche 1 bis 5, umfassend die Schritte, bestehend aus:
(i) Einbringen der polymeren Komponenten (a) bis (d) und mindestens eines Teils der Komponente (e) in eine geeignete Mischvorrichtung;
(ii) Schmelzen und Mischen der Komponenten in der Mischvorrichtung;
(iii) gegebenenfalls Einbringen des Rests der Komponente (e) in die Mischung;
(iv) Schmelzen und endgültiges Mischen der Komponenten; und
(v) Granulieren.

7. Gewinnungsverfahren nach Anspruch 6, wobei die Schritte (i) bis (v) in einem Schneckenextruder durchgeführt werden.

8. Verwendung des Verbundwerkstoffs nach einem der Ansprüche 1 bis 5 zum Herstellen von Werkstücken durch Einspritzen.

9. Verwendung nach Anspruch 8 zum Herstellen von Fahrzeuginnenwerkstücken.

## Claims

1. Injectable composite material, comprising:
(a) 28 to 95 wt.% of a polypropylene-polyethylene copolymer comprising from 10 to 90 mol.% of ethylene;
(b) 0 to 10 wt.% of flow enhancer, the flow enhancer being a polymer having a melt index of between 200 and 2000 g/10 min at 230 °C under a load of 2.16 kg and being selected from the group consisting of a polypropylene homopolymer, a polypropylene copolymer, a polyethylene homopolymer and a polyethylene copolymer;
(c) 1 to 20 wt.% of an impact modifier selected from the group consisting of ethylene-propylene-diene monomer (EPDM), ethylene-propylene monomer (EPM), ethylene-propylene rubber (EPR), polyolefin elastomers (POE), copolymers and terpolymers based on ethylene and propylene, nitrile-butadiene rubber (NBR), isobutylene (IB), chlorinated rubber, poly(styrene-butadienestyrene) (SBS), styrene-ethylene-butene-styrene copolymer (SEBS), isobutylene-isoprene rubber (IIR), styrene-isoprene-styrene copolymer (SIS), chlorinated polyethylene (CM), isoprene, ethylene-butene, and their mixtures and derivatives, in particular grafted with maleic acid and/or maleic acid anhydride;
(d) 1 to 20 wt.% of a compatibilizing agent selected from the group consisting of polyolefins grafted with a carboxylic acid or one of its esters or anhydrides; and
(e) 3 to 70 wt.% of natural fibers selected from the group consisting of cotton, linen, hemp, Manila hemp or abaca, banana tree, jute, ramie, raffia, sisal, broom, wool, alpaca, mohair, cashmere, angora, silk, bamboo, miscanthus, kenaf, coconut, agave, sorghum, switch-grass and wood,
wherein the polypropylene-polyethylene copolymer forms a matrix, the matrix being formed by the component that is present in a majority proportion.

2. Composite material according to claim 1, wherein the flow enhancer is a polyolefin.

3. Composite material according to either claim 1 or claim 2, wherein the flow enhancer is a polyolefin obtained by metallocene catalysis.

4. Composite material according to any of claims 1 to 3, having, at its specific transformation temperature, a viscosity ranging from 5 Pa.s to 1000 Pa.s in a shear rate range specific to the injection ranging from 100 s⁻¹ to 50,000 s⁻¹.

5. Composite material according to any of claims 1 to 4, comprising 10 to 30 wt.% of natural fibers.

6. Method for preparing a composite material according to any of claims 1 to 5, comprising the steps of:
(i) introducing the polymeric components (a) to (d) and at least some of component (e) into a suitable mixing device;
(ii) melting and mixing said components in the mixing device;
(iii) if necessary, introducing the remainder of component (e) into the mixture;
(iv) melting and final mixing of the components; and
(v) granulation.

7. Preparation method according to claim 6, wherein steps (i) to (v) are carried out in a screw extruder.

8. Use of the composite material according to any of claims 1 to 5 for manufacturing parts by injection.

9. Use according to claim 8 for manufacturing vehicle interior parts.
